# EUROPEAN PATENT SPECIFICATION

(11) **EP 0 928 414 B1**
(45) Date of publication and mention of the grant of the patent: **02.01.2002**
(21) Application number: 97944534.3
(22) Date of filing: 29.09.1997
(51) Int. Cl.: G01L 9/06

(54) **COMPENSATION TECHNIQUE FOR RESISTIVE BRIDGE**
KOMPENSATIONSTECHNIK FÜR RESISTIVE BRÜCKE
TECHNIQUE DE COMPENSATION POUR PONT RESISTIF

(30) Priority: 27.09.1996 US 721495
(43) Date of publication of application: 14.07.1999
(73) Proprietor: HONEYWELL INC., Minneapolis Minnesota 55408 (US)
(72) Inventor: JOHNSON, Russell, L., New Brighton, MN 55112 (US)
(74) Representative: Powell, Timothy John
(86) International application number: US9717438
(87) International publication number: WO9813679

(56) References cited:
- EP-A- 0 655 606
- EP-A- 0 677 921
- WO-A-90/06723
- US-A- 3 899 695
- US-A- 4 463 274
- US-A- 4 869 107
- US-A- 5 146 788
- US-A- 5 187 985

## Description

### BACKGROUND OF THE INVENTION

The present invention relates to integrated sensing devices formed on an integrated circuit die. One example of such a device is a silicon based pressure sensing device having a cavity formed on one side and piezoresistors connected in a bridge arrangement formed on the opposite side. The present invention will be described with reference to a pressure sensing device but it is to be understood that the present invention has other applications. Such a pressure sensing device typically requires means for providing adjustments for null set, null compensation, span set, and span compensation. The present invention is directed toward the span compensation adjustment. The span of a pressure sensing device is the range of values specified for the sensor output parameter corresponding to the given full scale operating range, for example the span may be 0 to 100 millivolts, with a 10 volt DC supply, for an input pressure of 0 to 10 psi. Many applications, for example engine testing requires that the pressure sensor operate accurately over a wide range of temperatures, for example 200 degrees. The typical piezoresistive bridge will have a rather large temperature coefficient of resistance (TCR) and a changing sensitivity to pressure with changing temperature so that some means of compensating the bridge over a temperature range must be employed.

United States Patent 4,788,521 discloses a temperature compensation scheme that uses resistors having carefully chosen temperature coefficient of resistivity (TCR) that can be trimmed to achieve a zero volt output with zero pressure over a range of ambient temperatures. This patent also describes the use of resistors having carefully chosen temperature coefficients that are placed in series with the pressure bridge.

United States Patent 4,463,274 describes a temperature compensating circuit that utilizes a first thermistor and a second thermistor to provide a first signal and a second signal which are coupled with the signals from the pressure transducer.

United States Patent 5,146,788 describes a temperature compensating technique wherein the output of the pressure transducer is measured under conditions of constant pressure and temperature for different temperatures and pressures and the temperature coefficients of resistance, temperature coefficient of offset and temperature coefficient of sensitivity are calculated. These coefficients are used to select compensation network resistors.

In the past the gain of an amplifier associated with the bridge has been changed in order to compensate for the changing temperature. Thus a need exists for providing span compensation for a bridge circuit or other active network over a wide range of temperatures using only passive resistor elements.

### SUMMARY OF THE INVENTION

The present invention solves these and other needs by providing in a first aspect a technique for reducing the magnitude and shaping the span shift characteristic of a piezoresistive bridge arrangement. In a second aspect the present invention provides a technique for providing span compensation by placing a selectively configured network of resistors in series with the bridge arrangement.

### BRIEF DESCRIPTION OF THE DRAWINGS

Figure 1 is a block diagram and a simplified schematic of the present invention.
Figure 2 is an integrated circuit layout of a portion of the circuit of Figure 1.
Figures 3 through 7 show graphs of certain relationships of the present invention.
Figure 8 is an integrated circuit layout of one embodiment of the present invention.

### DETAILED DESCRIPTION OF THE INVENTION

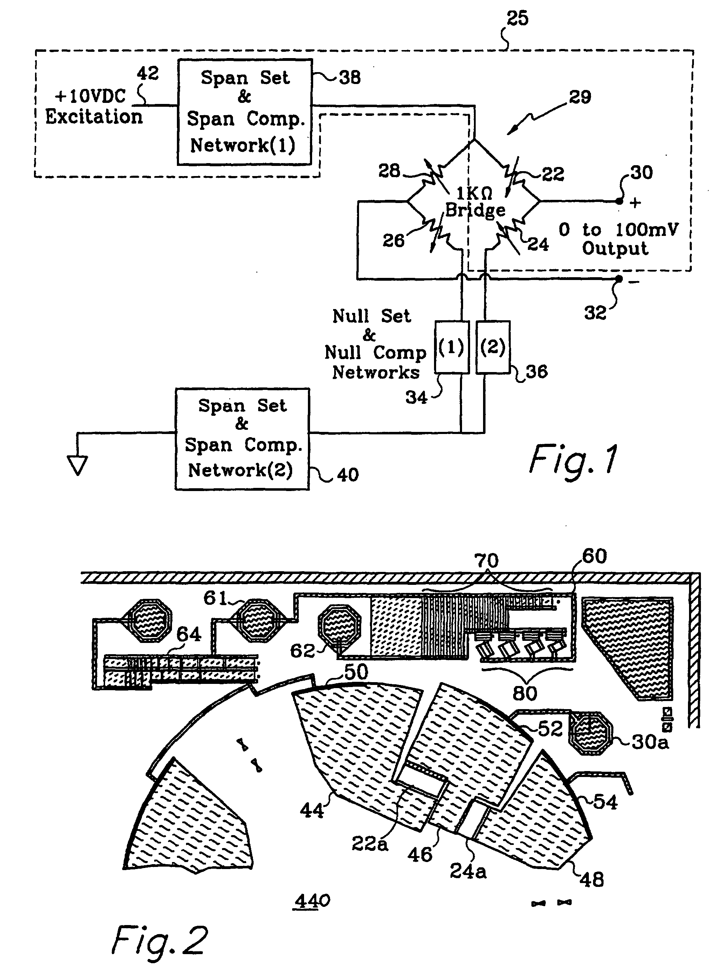

A simplified schematic of a pressure sensor bridge arrangement is shown in Figure 1 including piezoresistors 22, 24, 26 and 28, connected in a well known bridge arrangement 29 having an output 30 and 32. Null set and null compensation networks 34 and 36 are also shown as are span set and span compensation networks 38 and 40. Excitation voltage is at 42 and 43 is ground.

Figure 2 shows details of an integrated circuit layout of a portion 25 of Figure 1. Radial resistor 22a and tangential resistor 24A formed on diaphragm 440 correspond to resistor 22 and resistor 24 respectively.

Resistors 22a and 24a are piezoresistors formed by well known implantation techniques. The implant dosage is selected to have a high TCR and sheet resistivity. Heavy implant regions 44, 46 and 48 provide a low resistance connection from resistors 22a and 24a to metallization 50, 52 and 54. Terminal 30a of Figure 2 corresponds to 30 of Figure 1. Span compensation network 60 is connected in series with terminal 62 and span set network 64 which is connected at metallization 50 through heavy implant region 44 to resistor 22a. Terminal 61 is between network 60 and network 64. Span compensation network 60 includes a group 70 of resistors having a very low temperature coefficient of resistance, e.g., chrome silicon resistors connected in parallel and a group 80 of implanted resistors connected in parallel having a TCR similar to the TCR of piezoresistors 22a and 24a.

Group 70 of resistors and group 80 of resistors are connected in parallel between terminal 62 and terminal 61. All resistors in group 80 are initially connected and are selectively disconnected by opening a connection link to provide an approximate desired resistance. All resistors in group 70 are initially connected and are selectively disconnected by opening a connective link to provide a more precise desired resistance value between terminal 62 and terminal 61.

The operation of the present invention can now be explained. Span compensation provides for keeping the output voltage between terminal 30 and terminal 32 constant for a given pressure as the temperature varies. Bridge 29 has a fairly large TCR which increases its resistance with increasing temperature, or has a positive slope. Pressure sensitivity of bridge 29 decreases with increasing temperature, or has a negative slope. Without span compensation and assuming there was a zero TCR resistor in series with the bridge to initially set the span, the voltage across the bridge would increase with increasing temperature, due to the larger TCR of the bridge compared to the TCR of the series resistor, and output voltage would also increase. This would be due to the bridge at a higher temperature providing a larger portion of the total voltage drop across the combination of the bridge and the span set resistor. The span change as a function of temperature is non-linear. The sensitivity of the bridge 29, i.e., the change in the radial and tangential resistor elements for a given change in pressure is not constant as a function of temperature. The present invention relates to how to compensate for the non-linear function of resistance versus temperature and the non-linear function of pressure sensitivity (span) versus temperature.

The present invention relates to how to passively compensate the non-linear pressure sensitivity (span) characteristics as a function of temperature of a silicon piezoresistive sensor where the full scale output voltage requirement is typically one percent of the supply voltage. For example, a 100 millivolt DC output for a 10 volt DC excitation. The pressure sensitivity of the silicon-based sensor described herein is capable of providing full scale output from 2.5% to 4% of supply voltage with good linearity. Therefore, the pressure bridge requires only 25% to 40% of the excitation voltage to deliver a full scale output of 1% of the supply voltage. For example, 100 millivolt DC output with a 10 volt DC supply voltage. The remaining 60% to 75% of the supply voltage can then be used to provide passive span compensation of the pressure bridge over temperature.

The span compensation scheme embodied in this invention consists of two parts:

Firstly, the span shift characteristics of the sensor bridge is reduced in magnitude and reshaped in a manner such that the inverse of the span shift function normalized to 25 degrees C (defined as l/span) has the same polarity and similar curvature as the sensor bridge resistance over temperature (as normalized to 25°C).

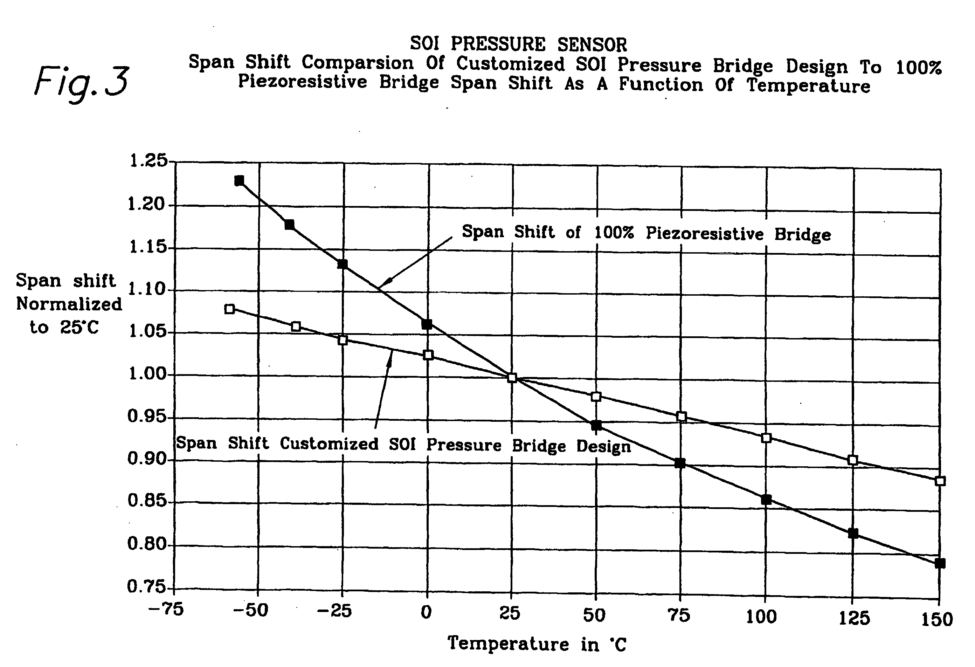

In FIGS. 3, 5, 6 and 7, the lightly doped sensor elements equal 66% of the bridge resistance and the heavily doped leadout resistance equals 28.3% of the bridge resistance, and the null set/null comp network equals 5.7% of the bridge resistance.

This feature is illustrated in Figure 3 which compares the span shift of pressure bridge design embodied by this invention to the familiar, intrinsic span shift characteristic of a 100% piezoresistive bridge. The customized design provides a reduction in span shift by approximately a factor of 3 at the cold temperature extremes and a factor of 2 at the hot temperature extremes.

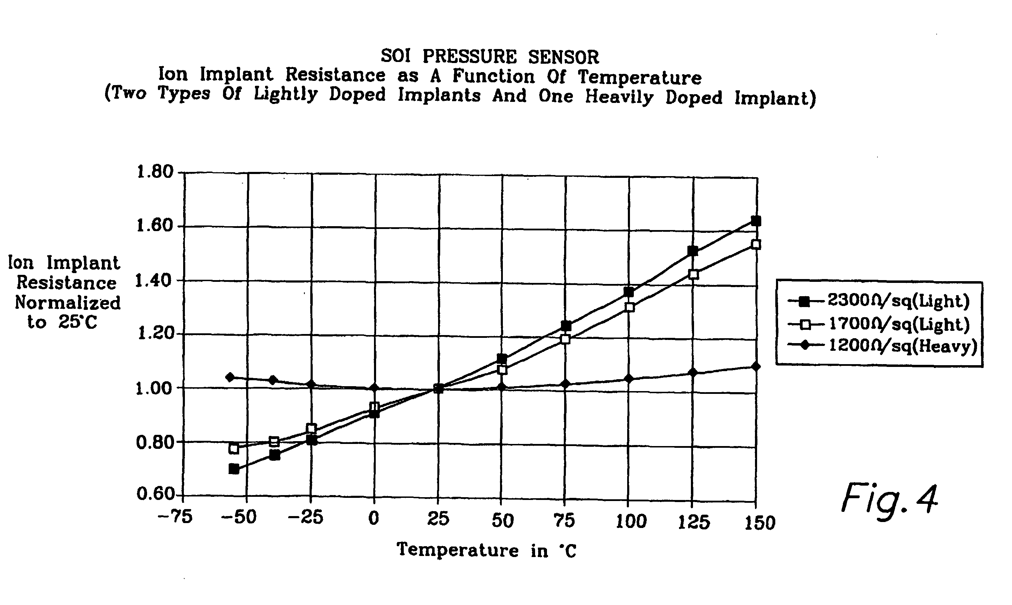

The customized span shift depicted in Figure 3 as a function of temperature as achieved by constructing the pressure bridge in the following manner.
1. The piezoresistive sensor elements 22a and 24a are lightly doped, high TCR, ion implanted resistors whose magnitude are equal to 66% of the total bridge resistance for this example. The sheet resistivity for this example is 1700 ohms/square. The resistance characteristics of these elements as a function of temperature is depicted in Figure 4.
2. The lead-out resistors 44, 46, and 48 are heavily doped, low TCR, ion implanted elements with a combined magnitude equal to 28.3% for this example. The sheet resistivity for this example is 120 ohms/square. The resistance characteristics of these elements as a function of temperature is also depicted in Figure 4.
3. The null set and null compensation networks 34 and 36 comprises the remaining 5.7% of the bridge resistance. These networks consist primarily of laser-trimmable CrSi thin film resistors (TFR) with near zero TCR characteristics.

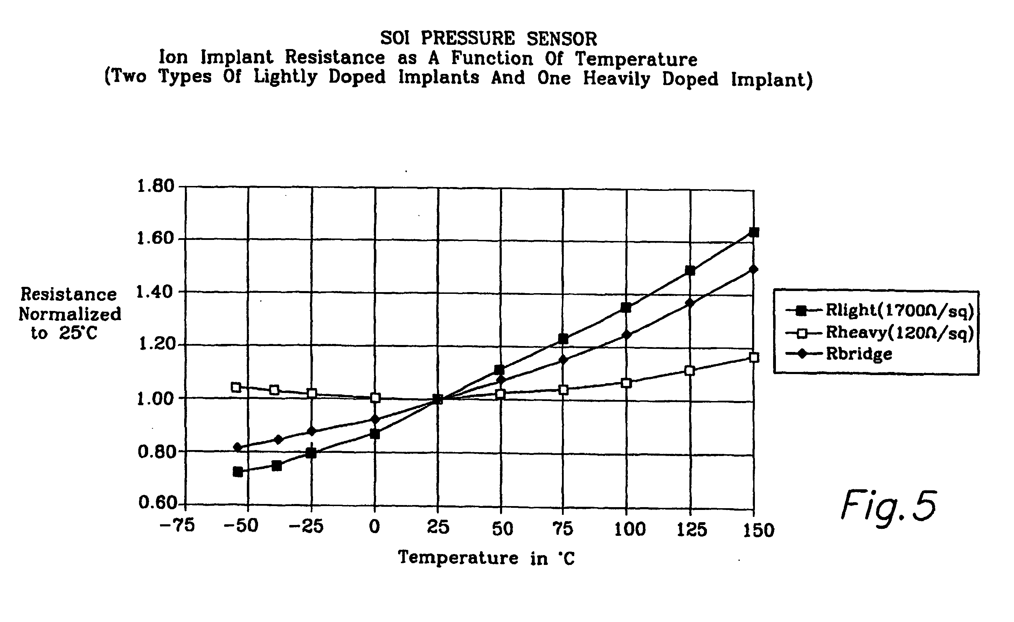

The resultant bridge resistance as a function of temperature (normalized to 25°C) is provided in Figure 5 along with the temperature characteristics of the 1700 ohm/square light implant and the 120 ohm/square heavy implant.

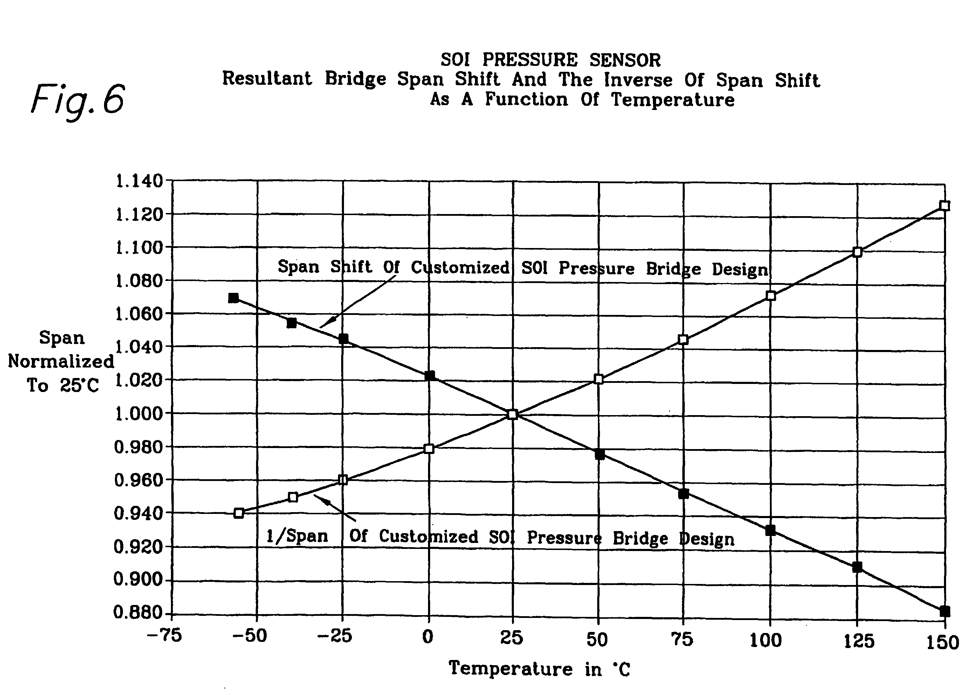

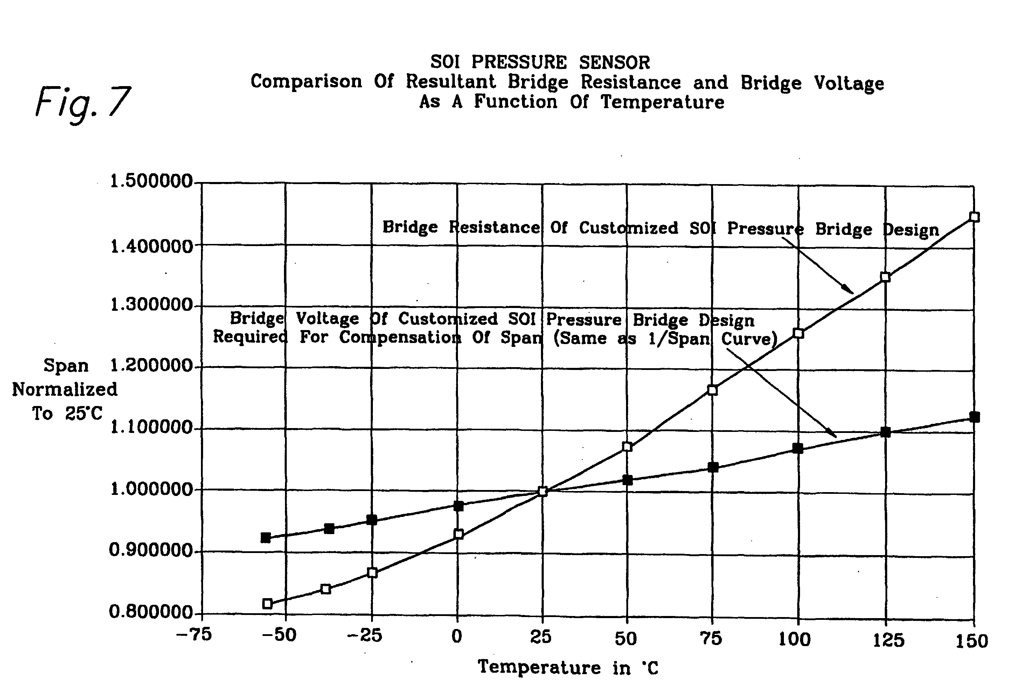

Figure 6 provides a direct comparison of the span as a function of temperature (normalized to 25°C) and the inverse of the normalized span as a function of temperature which is denoted as 1/span on the chart. The 1/span characteristic as a function of temperature defines the exact characteristic of the bridge voltage (Vbridge) as a function of temperature as required to fully compensate the span shift characteristics of the customized constructed bridge. The 1/span characteristic as a function of temperature is of the same polarity (increases with increasing temperature) and similar curvature (increases with increasing temperature) as the bridge resistance characteristics which are depicted in Figure 7. The slope of the bridge resistance as a function of temperature is much greater (approximately a factor of 3 for this example) than that required for span compensation of the customized sensor bridge.

The second part of the present invention will now be explained. The second part embodies the span set and span compensation networks 38 and 40 shown in Figure 1. In Figure 2 a span compensation network 60 and a span set network 64 are shown. Span set network 64 consists of a near zero TCR laser trimmable thin film resistor network. Span compensation network 60 consists of thin film resistor network 70 in parallel with lightly doped, high TCR ion implanted resistors 80 which has for this example the temperature characteristics of the 1700 ohm/square shown in Figure 5. During wafer fabrication, implant resistors 80 are processed at the same time as the piezoresistors 22a and 24a. Span compensation network 60 controls the TCR characteristic of network 60. For example, trimming links (increasing resistance) in portion 70 simultaneously increases the series resistance and the TCR of network 60. This increase in series resistance TCR in turn reduces both the magnitude of the bridge voltage and its sensitivity to temperature.

The final trimmed values of span set network 64 and span compenstion network 60 provide simultaneously:
1)The bridge excitation voltage required to provide the required full scale output voltage,e.g., 100 millivolt output with a bridge voltage of 3.333 volts DC.
2)Bridge voltage as a function of temperature that matches the temperature characteristic depicted in Figure 7 which provides a fully span compensated sensor.

The present invention as described in parts I and 2 above provides plus or minus 0.5% full scale or better compensation over a temperature range of -55 degrees C to 150 degrees C. For temperatures up to 200 degrees C, and additional span compensation network can be provided that uses the 120 ohm/square implant of Figure 5 in parallel with a Thin film resistor trim network. The TCR of this implant, which goes positive in both directions from 25 degrees C, provides capability to better curve fit the span compensation by providing increased compensation at high temperature and decreased compensation at low temperatures.

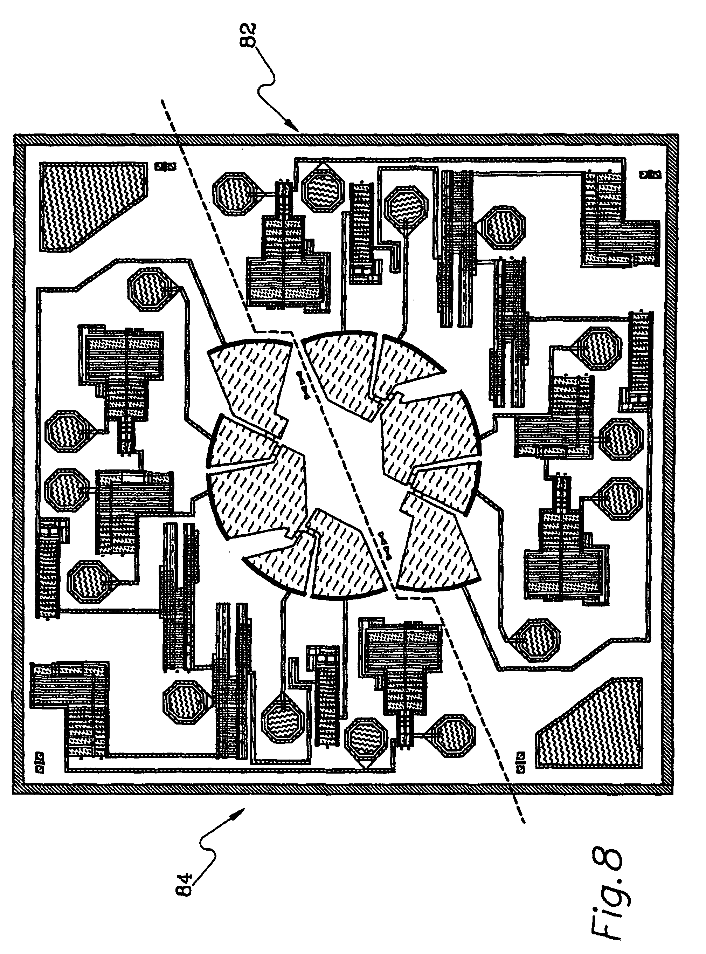

Figure 8 illustrates an embodiment ot the present invention wherein two completely independent resistive bridge devices 82 and 84 according to the present invention are formed on a single integrated circuit die having a single diaphragm. This provides completely independent electrical redundancy at a lower cost, space and weight than providing two separate circuit die. When fabricated on SOI the circuits are completely electrically isolated from the backside of the die which may be in contact with conductive media.

In addition, the present invention includes attributes that significantly improve the pressure linearity of this design over previous conventional designs with similar deltaR /R pressure sensitivity. When packaged as an absolute ssensor with the vacuum reference on the active side of the silicon chip, the pressure media is applied to the back or cavity side of the sensor. Comparing the performance of this pressure sensor to. other silicon sensors packaged in the same manner reveals that pressure linearity error is reduced by a factor of 10 or better when compared to other sensors with similar deltaR/R sensitivities. This improved pressure linearity is attributed to the combination of the following elements.
1) The pressure linearity of a bridge not operated at a constant voltage can be improved by not designing th deltaR/R of the tangential elements to be equal to the deltaR/R of the radial elements. This inequalilty will result in the resistance of the bridge changing with pressure which in turn will result in the bridge voltage drop changing with pressure. The increase or decrease in bridge voltage with applied pressure can be used to achieve linearity compensation. The deltaR/R of the tangential and radial elements are not equal due to the configuration of the leadout resistors and the location of the piezoresistive elements. Therefore, a small linearity improvement is provided.
2) The design features piezoresistive elements that use only approximately 1/3 of a square of implanted resistance. This means that the geometry of the element is 3 times wider that it is long. This unique configuration is possibly less susceptable to the non-linear stress occuring in the circular diaphragm than elongated and serpentine constructed patterns that are much longer than they are wide.
3) Another feature of the design of this sensor is that it is an SOI sensor which means that the ion implanted resistor elements are no longer buried into the silicon as is the case for implanted resistors using bulk sillicon. For this SOI sensor, the implanted elements are fabricated on top of the silicon diaphragm separated by the isolation layer. This structure, therefore is mechanically different and may also be less susceptible to the non linear stress components of the conventional diaphragm design.

The curves shown in the figures do not represent actual test data points, but rather represent third order polynomials that have been fitted to test data.

The present invention was developed using silicon on insulator (SOI) structures but is not limited to SOI and may be used on bulk silicon when consideration is given to the junction effects present in bulk silicon structures.

The scope of the present invention is to be limited by the appended claims rather than by the foregoing description.

## Claims

1. A temperature compensated pressure sensor bridge circuit comprising:
a first plurality of piezoresistors (22a, 24a) having a first temperature coefficient of resistivity TCR;
said bridge circuit having an output (30, 32);
means for applying a first voltage to said bridge circuit;
**characterized by** a second plurality of piezoresistors (44, 46, 48) having a second TCR, substantially lower than said first TCR, interconnecting said first plurality and forming lead out resistors within said bridge, with said first plurality representing a first portion of a total resistance of said bridge circuit and said second plurality representing a second portion of said total resistance of said bridge circuit, with a relative resistance of said first portion and said second portion being selected to perform a first pressure sensitivity compensation of said bridge circuit as a function of ambient temperature.

2. Temperature compensated pressure sensor bridge circuit of claim 1 wherein a span shift characteristic of said bridge circuit is substantially less than a span shift of a bridge circuit constructed only of piezoresistors having a first TCR.

3. Temperature compensated pressure sensor bridge circuit of claim 2 wherein said bridge circuit has a span shift characteristic as a function of ambient temperature and the inverse of said span shift characteristic represents a characteristic of a bridge voltage which will fully compensate said span shift characteristic.

4. Temperature compensated pressure sensor bridge circuit of claim 3 wherein said bridge circuit is formed in a silicon on insulator wafer.

5. Temperature compensated pressure sensor bridge circuit of claim 1 further comprising:
an adjustable resistive network (60, 64) having a magnitude and a TCR, said resistive network connected in series with said bridge, said magnitude selected to set a desired full scale value of said second voltage.

6. Temperature compensated pressure sensor bridge circuit of claim 5 wherein said TCR of said adjustable resistive network (60, 64) is selected to cause a voltage change on said bridge to perform a second pressure sensitivity compensation of said bridge circuit.

7. Temperature compensated pressure sensor bridge circuit of claim 6 wherein said adjustable resistive network (60) comprises a third plurality of resistors (70) having a TCR comparable to a TCR of said first plurality of piezoresistors and a fourth plurality of resistors (80) having a near zero TCR.

8. Temperature compensated pressure sensor bridge circuit of claim 1 wherein said first plurality of piezoresistors (22a, 24a)have a width and a length and said width is substantially greater than said length.

9. Temperature compensated pressure sensor bridge circuit of claim 8 wherein said bridge circuit is a Wheatstone bridge and further comprises null set and null compensation networks (34, 36) connected within said Wheatstone bridge circuit.

10. Temperature compensated pressure sensor bridge circuit of claim 8 further comprising a second identical temperature compensated pressure sensor bridge circuit formed on a single semiconductor die to provide redundancy and to reduce size and weight.

11. Temperature compensated pressure bridge circuit of claim 10 wherein said bridge circuits are formed on a silicon on insulator die.

## Patentansprüche

1. Temperaturkompensierte Drucksensor-Brückenschaltung, die folgendes umfaßt:
eine erste Mehrzahl von Piezowiderständen (22a, 24a) mit einem ersten Temperaturkoeffizienten;
wobei die Brückenschaltung einen Ausgang (30, 32) aufweist;
ein Mittel zum Anlegen einer ersten Spannung an die Brückenschaltung;
**gekennzeichnet durch** eine zweite Mehrzahl von Piezowiderständen (44, 46, 48) mit einem wesentlich unter dem ersten Temperaturkoeffizienten liegenden zweiten Temperaturkoeffizienten, die die erste Mehrzahl verbinden und Herausführungswiderstände in der Brücke bilden, wobei die erste Mehrzahl einer ersten Teil eines Gesamtwiderstands der Brückenschaltung und die zweite Mehrzahl einen zweiten Teil des Gesamtwiderstands der Brückenschaltung darstellen, wobei ein relativer Widerstand des ersten Teils und des zweiten Teils so ausgewählt sind, daß eine erste Druckempfindlichkeitskompensation der Brückenschaltung als Funktion der Umgebungstemperatur durchgeführt wird.

2. Temperaturkompensierte Drucksensor-Brückenschaltung nach Anspruch 1, bei der eine Meßspannenverschiebungscharakteristik der Brückenschaltung wesentlich kleiner ist als eine Meßspannenverschiebungscharakteristik einer nur aus Piezowiderständen mit einem ersten Temperaturkoeffizienten aufgebauten Brückenschaltung.

3. Temperaturkompensierte Drucksensor-Brückenschaltung nach Anspruch 2, bei der die Brückenschaltung eine Meßspannenverschiebungscharakteristik als Funktion der Umgebungstemperatur aufweist und das Inverse der Meßspannenverschiebungscharakteristik eine Charakteristik einer Brückenspannung darstellt, die die Meßspannenverschiebungscharakteristik vollständig kompensiert.

4. Temperaturkompensierte Drucksensor-Brückenschaltung nach Anspruch 3, bei der die Brückenschaltung auf einem SOI-Wafer (Silizium auf Isolator) ausgebildet ist.

5. Temperaturkompensierte Drucksensor-Brückenschaltung nach Anspruch 1, die weiterhin folgendes umfaßt:
ein einstellbares Widerstandsnetz (60, 64) mit einer Größe und einem Temperaturkoeffizienten, wobei das Widerstandsnetz in Reihe mit der Brücke geschaltet ist, wobei die Größe so ausgewählt ist, daß für die zweite Spannung ein gewünschter Skalenendwert eingestellt wird.

6. Temperaturkompensierte Drucksensor-Brückenschaltung nach Anspruch 5, bei der der Temperaturkoeffizient des einstellbaren Widerstandsnetzes (60, 64) so ausgewählt ist, daß bewirkt wird, daß eine Spannungsänderung an der Brücke zu einer zweiten Druckempfindlichkeitskompensation der Brückenschaltung führt.

7. Temperaturkompensierte Drucksensor-Brückenschaltung nach Anspruch 6, bei der das einstellbare Widerstandsnetz (60) eine dritte Mehrzahl von Widerständen (70) mit einem einem Temperaturkoeffizienten der ersten Mehrzahl von Piezowiderständen vergleichbaren Temperaturkoeffizienten und eine vierte Mehrzahl von Widerständen (80) mit einem Temperaturkoeffizienten von fast Null umfaßt.

8. Temperaturkompensierte Drucksensor-Brückenschaltung nach Anspruch 1, bei der die erste Mehrzahl von Piezowiderständen (22a, 24a) eine Breite und eine Länge aufweisen und die Breite wesentlich größer ist als die Länge.

9. Temperaturkompensierte Drucksensor-Brückenschaltung nach Anspruch 8, bei der die Brückenschaltung eine Wheatstone-Brücke ist und weiterhin in die Wheatstone-Brückenschaltung geschaltete Nullsetz- und Nullkompensationsnetze (34, 36) umfaßt.

10. Temperaturkompensierte Drucksensor-Brückenschaltung nach Anspruch 8, weiterhin mit einer auf einem einzelnen Halbleiterchip ausgebildeten zweiten identischen temperaturkompensierten Drucksensor-Brückenschaltung zur Bereitstellung von Redundanz und zur Reduktion von Größe und Gewicht.

11. Temperaturkompensierte Drucksensor-Brückenschaltung nach Anspruch 10, bei der die Brückenschaltungen auf einem SOI-Chip (Silizium auf Isolator) ausgebildet sind.

## Revendications

1. Circuit de pont d'un capteur de pression à compensation de température, comprenant :
une première pluralité de piézorésistances (22a, 24a) présentant un premier coefficient TCR de résistivité en fonction de la température,
ledit circuit de pont présentant une sortie (30, 32) ;
un moyen pour appliquer une première tension sur ledit circuit de pont ;
**caractérisé par** une deuxième pluralité de piézorésistances (44, 46, 48) présentant un deuxième TCR essentiellement inférieur audit premier TCR, qui relie ladite première pluralité et qui forme des résistances de sortie dans ledit pont, ladite première pluralité représentant une première partie d'une résistance totale dudit circuit de pont et ladite deuxième pluralité représentant une deuxième partie de ladite résistance totale dudit circuit de pont, une résistance relative de ladite première partie et une résistance relative de ladite deuxième partie étant sélectionnées pour effectuer une première compensation de la sensibilité vis-à-vis de la pression dudit circuit de pont en fonction de la température ambiante.

2. Circuit de pont d'un capteur de pression à compensation de température selon la revendication 1, dans lequel une caractéristique de dérive dudit circuit de pont est essentiellement inférieure à une dérive d'un circuit de pont constitué uniquement de piézorésistances présentant un premier TCR.

3. Circuit de pont d'un capteur de pression à compensation de température selon la revendication 2, dans lequel ledit circuit de pont présente une caractéristique de dérive en fonction de la température ambiante, et l'inverse de ladite caractéristique de dérive représente une caractéristique d'une tension de pont qui compense complètement ladite caractéristique de dérive.

4. Circuit de pont d'un capteur de pression à compensation de température selon la revendication 3, dans lequel ledit circuit de pont est formé dans une galette de silicium sur isolateur.

5. Circuit de pont d'un capteur de pression à compensation de température selon la revendication 1, comprenant en outre :
un réseau résistif ajustable (60, 64) présentant une valeur et un TCR, ledit réseau résistif étant relié en série sur ledit pont, ladite valeur étant sélectionnée pour fixer une valeur voulue de fond d'échelle de ladite deuxième tension.

6. Circuit de pont d'un capteur de pression à compensation de température selon la revendication 5, dans lequel ledit TCR dudit réseau résistif ajustable (60, 64) est sélectionné pour amener une modification de tension sur ledit pont à réaliser une deuxième compensation de la sensibilité vis-à-vis de la pression dudit circuit de pont.

7. Circuit de pont d'un capteur de pression à compensation de température selon la revendication 6, dans lequel ledit réseau résistif ajustable (60) comprend une troisième pluralité de résistances (70) dont le TCR est comparable au TCR de ladite première pluralité de piézorésistances, et une quatrième pluralité de résistances (80) dont le TCR est proche de zéro.

8. Circuit de pont d'un capteur de pression à compensation de température selon la revendication 1, dans lequel ladite première pluralité de piézorésistances (22a, 24a) présente une largeur et une longueur, ladite largeur étant essentiellement plus grande que ladite longueur.

9. Circuit de pont d'un capteur de pression à compensation de température selon la revendication 8, dans lequel ledit circuit de pont est un pont de Wheatstone et comprend en outre des réseaux (34, 36) de définition du zéro et de compensation du zéro reliés dans ledit circuit de pont de Wheatstone.

10. Circuit de pont d'un capteur de pression à compensation de température selon la revendication 8, comprenant en outre un deuxième circuit identique de pont de capteur de pression à compensation de température formé sur une seule matrice de semi-conducteur de manière à permettre une redondance et à réduire sa taille et son poids.

11. Circuit de pont d'un capteur de pression à compensation de température selon la revendication 10, dans lequel lesdits circuits de pont sont formés sur une puce de silicium sur isolateur.
